# EUROPÄISCHE PATENTANMELDUNG

(11) **EP 2 752 689 A1**
(43) Veröffentlichungstag der Anmeldung: **09.07.2014**
(21) Anmeldenummer: 13150049.8
(22) Anmeldetag: 02.01.2013
(51) Int. Cl.: G02B 5/02, G01J 1/42, G01S 3/786, G02B 27/09, G01N 21/27

(54) **Kalibriereinrichtung zur Kalibration eines extraterrestrischen optischen Instruments und Kalibrierverfahren mit dieser**

(71) Anmelder: Jena-Optronik GmbH, 07745 Jena (DE)
(72) Erfinder: Merschdorf, Matthias, 07743 Jena (DE)
(74) Vertreter: Ege & Lee Patentanwälte

(57) **Zusammenfassung**

Die Erfindung betrifft eine Kalibriereinrichtung (1) und ein Kalibrierverfahren zur Kalibration zumindest eines Detektors (6) eines optischen Instruments (2) in extraterrestrischer Umgebung insbesondere zur Fernerkundung der Erde enthaltend eine Vielzahl nebeneinander angeordneter optisch wirksamer, auf einen strahlenden Himmelskörper (4) ausgerichteter und über ein Fourier-Element (12) auf zumindest einen Detektor (6) abbildender Elemente (7). Um eine Kalibration unabhängig von Variationen der relativen Position der Strahlungsquelle (4) und/oder einem Degradationsverhalten der Kalibriereinrichtung (1) und/oder des Instrumentes (2) zu kompensieren, sind numerische Aperturen der optisch wirksamen Elemente (7) derart eingestellt, dass ein Akzeptanzwinkel der optisch wirksamen Elemente (7) ein Vielfaches eines von der Strahlungsquelle (4) eingestrahlten Strahlungswinkels (α) beträgt, sodass eine auf den Detektor (6) abgebildete Signalintensität (I) innerhalb des an die Variation der relativen Position der Strahlungsquelle (4) angepassten Akzeptanz-Winkelbereichs unabhängig vom Einstrahlwinkel (β) der Strahlungsquelle (4) ist.. Ein Kalibrierverfahren berücksichtigt dabei durch partielles Bestrahlen der Kalibriereinrichtung (1) und/oder des Detektors (6) ein Degradationsverhalten der Komponenten.

## Beschreibung

Die Erfindung betrifft eine Kalibriereinrichtung und ein Kalibrierverfahren zur Kalibration zumindest eines Detektors eines optischen Instruments in extraterrestrischer Umgebung insbesondere zur Fernerkundung der Erde enthaltend eine Vielzahl nebeneinander angeordneter optisch wirksamer, auf einen strahlenden Himmelskörper ausgerichteter und über ein Fourier-Element, beispielsweise Teleskope auf zumindest einen Detektor abbildender Elemente.

Extraterrestrische, optische Instrumente wie beispielsweise Radiometer, Spektrometer und dergleichen erfassen Strahlungsintensitäten von Objekten wie bestrahlten oder selbst strahlenden Körpern, insbesondere der Erde von einem extraterrestrischen Standpunkt aus. Hierzu wird eine Apertur mit zumindest einem in einem Strahlengang des optischen Instruments nachfolgenden Detektor mit Licht des Objekts beleuchtet. Dabei kann sich die Instrumentencharakteristik ("instrument response function") abhängig von Betriebsparametern, beispielsweise der Betriebsdauer ändern, so dass derartige optische Instrumente kalibriert werden müssen, beispielsweise deren Empfindlichkeit, spektrale Charakteristik und dergleichen.

Hierzu werden Kalibriereinrichtungen vorgesehen, bei der die Strahlung eines Himmelskörpers, bevorzugt der Sonne, auf den Detektor gelenkt wird und das vom Detektor gemessene Signal erfasst und auf eine kalibrierte Lichtintensität korrigiert wird. Die Strahlung der Strahlungsquelle wie Sonne wird hierbei - wie aus der WO 00/11498 A1 bekannt - in Form von Diffusoren in Form von Lambert'schen Volumen- beziehungsweise Oberflächenstreuern auf die lichtsensitive Bildfläche des Detektors gestreut. Hierbei wird die gestreute Strahlung der Strahlungsquelle im Wesentlichen gleichmäßig über die strahlungssensitive Bildfläche verteilt, so dass die gesamte strahlungssensitive Fläche auf dieselbe Strahlungsintensität kalibriert werden kann. Derartige Diffusoren unterliegen Variationen in der Winkelverteilung gemäß dem Lambert'schen Gesetz und die Effizienz der Streuwirkung in den Strahlengang des Radiometers ist gering. Zudem können sie unerwünschte Degradationseffekte zeigen.

Weiterhin ist eine Strahlungsumformungseinrichtung zur Homogenisierung von Strahlung beispielsweise aus der DE 10 2006 047 941 bekannt, bei der mithilfe von Mikrolinsenarrays Strahlung durch Mehrfachfokussierung mittels einzelner Mikrolinsen auf die Bildfläche homogenisiert projiziert wird. Ziel ist hierbei, dadurch bildseitig eine homogene Lichtverteilung über die gesamte Bildfläche zu erzielen. Das Mikrolinsenarray ist dabei typischerweise auf die Strahlungsquelle ausgerichtet und die numerischen Aperturen auf die numerische Apertur der einfallenden Strahlung bzw. auf die Größe der ausgeleuchteten Bildfläche abgestimmt. Bei einer Verlagerung der Lichtquelle und einer damit verbundenen Änderung der Einstrahlrichtung kann sich die Intensität in Nebenbilder verlagern oder je nach Ausprägung des Elementes verlagert sich die homogen ausgeleuchtete Fläche als Ganzes, so dass eine Kalibration damit nicht möglich wäre. Aufgrund der sich gegenüber dem optischen Instrument in extraterrestrischen Anwendungen, beispielsweise aufgrund von Bahnänderungen laufend änderndem Einfallswinkel der Strahlungsquelle mit den damit verbundenen Lichtintensitätsschwankungen, ist eine derartige Anordnung ohne Berücksichtigung der Positionsveränderung der Strahlungsquelle zur Kalibration des optischen Instruments nicht einsetzbar. Desweiteren ist eine Unterscheidung zwischen einer Degradation der Strahlungsquelle, des Strahlumformers und des Instrumentes nicht möglich.

Im Gegensatz zu den bekannten Strahlhomogenisierungseinrichtungen ist es nicht Ziel der Erfindung, bildseitig eine homogene Lichtverteilung in der Bildebene zu erzeugen. Aufgabe der Erfindung ist vielmehr, objektseitig eine vom Einfallswinkel der Strahlung eines Himmelskörpers unabhängige Kalibriereinrichtung und ein zugehöriges Kalibrierverfahren unter Berücksichtigung von Degradationsvorgängen in extraterrestrischer Umgebung vorzuschlagen.

Die Aufgabe wird durch den Gegenstand des Anspruchs 1 und die Verfahrensmerkmale des Anspruchs 11 gelöst. Die von diesen Ansprüchen abhängigen Unteransprüche geben vorteilhafte Ausführungsformen wieder.

Die vorgeschlagene Kalibriereinrichtung zur Kalibration zumindest eines Detektors eines optischen Instruments in extraterrestrischer Umgebung insbesondere zur Fernerkundung der Erde enthält eine Vielzahl nebeneinander angeordneter optisch wirksamer, auf einen strahlenden Himmelskörper, bevorzugt die Sonne oder den Mond ausgerichteter und über ein Fourier-Element auf zumindest einen Detektor abbildender Elemente, wobei numerische Aperturen der optisch wirksamen Elemente derart eingestellt sind, dass ein Akzeptanzwinkel der optisch wirksamen Elemente auf die Veränderung der relativen Position des Himmelskörpers abgestimmt wird und typischerweise ein Vielfaches des vom Himmelskörper eingestrahlten Strahlungswinkels beträgt, sodass eine auf den zumindest einen Detektor abgebildete Lichtintensität innerhalb des definierten Winkelbereichs unabhängig vom Einstrahlwinkel der Strahlungsquelle ist. Beispielsweise erscheint die Sonne von Erdnähe aus gesehen unter 0.5° Divergenz. Der Akzeptanzwinkel der optisch wirksamen Elemente würde dagegen typischerweise mindestens 5° bis 10° betragen, um insbesondere jahreszeitliche Schwankungen der Sonnenposition zu erfassen.

Durch die bevorzugt gleich ausgebildeten numerischen Aperturen der optisch wirksamen Elemente nimmt der Akzeptanzwinkel für die Strahlung der Strahlungsquelle gegenüber dem gesamten Halbraum allerdings nur einen Teilbereich ein, so dass bei einem an eine zu erwartende Variation des Einfallwinkels angepasstem Akzeptanzwinkel die Strahlungsintensität der Strahlungsquelle auf dem zumindest einen Detektor optimiert werden kann. Durch die gezielte Wahl des Akzeptanzwinkels kann gegenüber einem nach dem Lambert'schen-Prinzip arbeitenden Diffusor ein eindeutiger Intensitätsgewinn erzielt werden.

Durch die Ausbildung der Kalibriereinrichtung mit hohem Akzeptanzwinkel kann auf eine nachträgliche, das heißt nach dem Start und in extraterrestrischer Umgebung nur unter äußerst hohem und damit teile- und gewichtsintensivem Aufwand sowie potentiell fehleranfälligen Ausrichtung der Kalibriereinrichtung verzichtet werden.

Unter optisch wirksamen Elementen sind im Sinne der Erfindung Linsen, gekrümmte Spiegel und dergleichen zu verstehen, die nebeneinander beispielsweise flächig angeordnet sind. Bevorzugt werden diese optisch wirksamen Elemente miniaturisiert in Form von Mikroarrays, beispielsweise Mikrospiegel- oder Mikrolinsenarrays vorgesehen. Die optischen Flächen der optisch wirksamen Elemente können rotationssymmetrisch, zylindrisch, astigmatisch, oder in ähnlicher Weise ausgeformt sein. Die Arrays der optisch wirksamen Elemente wiederum können auf ebenen Flächen oder auch gewölbten Flächen in Form von Zylindern, Kegel- und/oder Kegelstumpfflächen ausgebildet sein.

Die Abstände d von nebeneinander liegenden Facetten der optisch wirksamen Elemente sind bevorzugt größer als oder gleich der lateralen Kohärenzlänge Iₜᵣₐₙₛ = λ/tan(α) mit der Wellenlänge λ und der Divergenzwinkel α der Strahlungsquelle. Hierbei kann bei der Sonne als Strahlungsquelle mit tan(α)≅ tan(0,5°) bei sichtbarer Strahlung von einer transversalen Kohärenzlänge Iₜᵣₐₙₛ von ca. 0,05 mm ausgegangen werden.

Neben einer zu der Oberflächennormalen eines Arrays parallelen Anordnung der optischen Elemente kann eine sogenannte off-axis-Geometrie der optisch wirksamen Elemente mit einer bevorzugt gleichen Winkelabweichung der optischen Achsen dieser gegenüber der Oberflächennormalen eines Arrays vorgesehen sein. Es hat sich hierbei als vorteilhaft erwiesen, wenn ein optischer Gangunterschied g zwischen den einzelnen Facetten der optisch wirksamen Elemente jeweils größer als oder gleich der longitudinalen Kohärenzlänge I_{long} = λ²/Δλ mit der Wellenlänge λ und der spektralen Bandbreite Δλ der von dem mindestens einen Detektor empfangenen Strahlung ist.

Weiterhin können zwischen einem ersten Array optisch wirksamer Elemente und dem Fourier-Element ein zweites oder weitere Arrays optisch wirksamer Elemente vorgesehen sein, wobei vorzugsweise jeweils ein Element des ersten Arrays einen Lichtkegel auf jeweils eine korrespondierende Facette eines optisch wirksamen Elements des zweiten oder weiteren Arrays einstrahlt. Bei Verwendung von mindestens zwei Arrays mit optisch wirksamen Elementen kann beispielsweise auch eine Funktion einer rechteckig umrandeten sphärischen Linse durch zwei gekreuzte Zylinderlinsen erzielt werden.

In besonderen Fällen kann zusätzlich zu der natürlichen Strahlungsquelle in Form des Himmelskörpers eine künstliche Strahlungsquelle mitgeführt werden, so dass spezielle Kalibrationsformen erzielbar sind.

In extraterrestrischen Umgebungen sind die optischen Elemente der Kalibriereinrichtungen genauso wie das Instrument besonderen Belastungsfaktoren, beispielsweise einer Strahlenbelastung, insbesondere UV- und radioaktive Strahlung, Kontamination durch Ausgasung verwendeter Komponenten und dergleichen ausgesetzt. Es hat sich daher als vorteilhaft erwiesen, die optisch wirksamen Elemente ohne jegliche Beschichtung vorzusehen, um eine mögliche Quelle von Degradation der Kalibriereinrichtung auszuschließen. Andererseits können spezielle Beschichtungen, die nicht durch die vorherrschende Strahlung degradiert werden zum Schutz der optischen Elemente vorgesehen sein.

Zur Ermittlung einer Degradation der Kalibriereinrichtung kann vorgesehen sein, einen Teil der optisch wirksamen Elemente abzudecken, indem beispielsweise einschwenkbare Blenden und dergleichen vorgesehen werden beziehungsweise die Kalibriereinrichtung beweglich ist. Alternativ oder zusätzlich kann ein Teil der lichtsensitiven Elemente des zumindest einen Detektors bedeckbar oder getrennt betreibbar ausgebildet sein.

Gemäß dem vorgeschlagenen Kalibrierverfahren zur Durchführung einer Kalibration zumindest eines Detektors eines optischen Instruments in extraterrestrischer Umgebung insbesondere zur Fernerkundung der Erde enthaltend eine Vielzahl nebeneinander angeordneter optisch wirksamer, auf einen strahlenden Himmelskörper ausgerichteter und über ein Fourier-Element auf den zumindest einen Detektor abbildender Elemente kann eine Unterscheidung einer Degradation der Kalibriereinrichtung einerseits und dem Instrument andererseits erfolgen, indem zumindest ein Teil der optisch wirksamen Elemente zumindest zeitweise einer geringeren Exposition an Strahlung und/oder Kontamination ausgesetzt wird. Dies kann beispielsweise durch Abdecken erfolgen. Es gibt also mindestens zwei Bereiche der Kalibriereinrichtung, die sich in ihrer Expositionsdauer unterscheiden. Aufgrund der geringeren Exposition tritt bei dem länger abgedeckten Bereich eine geringere Degradation auf. Wird das vorgeschlagene Kalibrierverfahren in vorgegebenen Zeitintervallen wiederholt, kann aus dem Unterschied der vom Detektor ermittelten Lichtintensitäten bei wechselweiser Bestimmung der Lichtintensitäten der länger beziehungsweise kürzer exponierten optischen wirksamen Elemente ein Zeitverhalten der Degradation der Kalibriereinrichtung ermittelt werden. Alternativ oder zusätzlich kann ein Teil der lichtsensitiven Elemente des zumindest einen Detektors des Instruments zumindest zeitweise abgedeckt werden, so dass dieser Teil mit einem Teil höherer Exposition verglichen und gegebenenfalls von der eingestrahlten Lichtintensität bewirkte Empfindlichkeitsverluste ermittelt werden können.

Die Erfindung wird anhand der in den Figuren 1 bis 4 dargestellten Ausführungsformen näher erläutert. Dabei zeigen:
- Figur 1: eine schematisch dargestellte Kalibriereinrichtung,
- Figur 2: ein schematisch dargestelltes Mikrospiegelarray in off-axis-Geometrie,
- Figur 3: das Degradationsverhalten einer Kalibriereinrichtung mit nachgeschaltetem Instrument über die Zeit
- und Figur 4: das Degradationsverhalten aufgetrennt in die Degradation des Instrumentes und der Kalibriereinrichtung mit den verschiedenen Expositionszeiten.

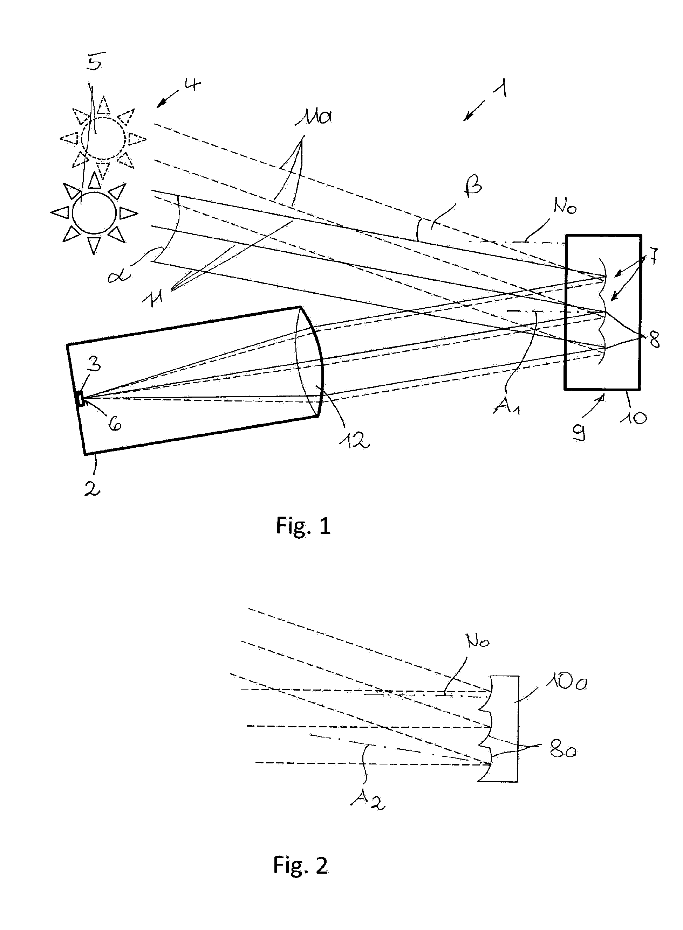

Figur 1 zeigt schematisch die Kalibriereinrichtung 1 zur Kalibration des extraterrestrisch eingesetzten, beispielsweise auf einem Erdbeobachtungssatelliten eingesetzten optischen Instruments 2 mit dem Detektor 6. Als strahlender Himmelskörper 4 dient die Sonne 5. Zur Erhöhung der Lichtintensität an der Bildfläche 3 des Detektors 6 ist eine Vielzahl nebeneinander angeordneter optisch wirksamer Elemente 7 - hier in Form von Spiegeln 8 - zu einem Array 9 - hier einem Mikrospiegelarray 10 vorgesehen, die die Strahlung 11, 11a der Sonne 5 mittels des Fourier-Elementes 12 auf die Bildfläche 3 mit einer Vielzahl von lichtsensitiven Elementen projizieren. Der mittels der numerischen Apertur der optisch wirksamen Elemente eingestellte Akzeptanzwinkel beträgt dabei ein Vielfaches, beispielsweise das 10-fache der einfallenden Strahldivergenz in Form des Strahlungswinkels α der Sonne 5, so dass die mittels der optisch wirksamen Elemente 7 in den Detektor eingestrahlte Lichtintensität unabhängig von dem zu erwartenden Einfallswinkelß der Sonne 5 ist. Durch dieÜber - lagerung der Lichtintensitäten der einzelnen optisch wirksamen Elemente 7 wird die Lichtintensität am Detektor 6 vergrößert. Die Kalibriereinrichtung 1 kann in Verbindung mit dem Fourier-Element 12 als Strahlformer eine homogene Strahlung in der Bildfläche 3 über mehrere Detektoren erzeugen, dies ist jedoch für die Ausbildung der Kalibriereinrichtung 1 keine notwendige Bedingung. Vielmehr wird jeder Detektor 6 für sich selbst kalibriert und erhält unabhängig vom Einfallswinkel der Lichtquelle immer dieselbe Lichtintensität, soweit keine Degradation der Kalibriereinrichtung 1 vorliegt. Eine Kompensation einer Degradation wird mittels des vorgeschlagenen Kalibrierverfahrens korrigiert. Die Spiegel 8 des Mikrospiegelarrays 10 weisen parallel zu der Oberflächennormalen Nₒ ausgebildete optische Achsen A₁ auf.

Die Figur 2 zeigt schematisch einen Schnitt durch ein zu dem Mikrospiegelarray 10 der Figur 1 ähnliches Mikrospiegelarray 10a mit Spiegeln 8a mit einer off-axis-Geometrie, bei der die optischen Achsen A₂ unterschiedlich zu der Oberflächennormalen Nₒ ausgebildet sind.

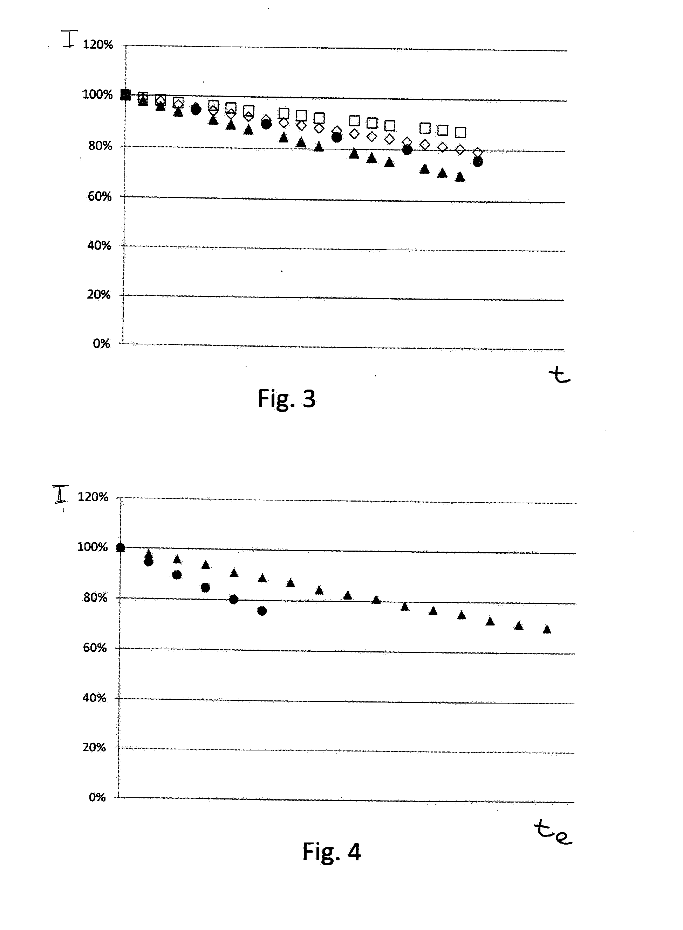

Die Figur 3 zeigt das Degradationsverhalten der Kalibriereinrichtung 1 samt Instrument 2 der Figur 1. Um ein Degradationsverhalten der Kalibriereinrichtung 1, die durch Belastungen im extraterrestrischen Einsatz beispielsweise durch Strahlenbelastung und/oder Kontamination bedingt ist, von der sich über die Zeit ändernden zu kalibrierenden Sensitivität des Instruments 2 zu trennen, werden in dem gezeigten Ausführungsbeispiel diskrete Teile der Kalibriereinrichtung, beispielsweise eine vorgegebene Anzahl optisch wirksamer Elemente 7 der Figur 1 abgedeckt. Es gibt also mindestens zwei Bereiche A und B der Kalibriereinrichtung, welche sich in ihrer Expositionsdauer unterscheiden, wobei A länger bzw. öfter exponiert wird als B. Über die Zeit t werden in vorgegebenen Abständen und/oder Expositionsintervallen Kalibrationen im Wechsel zwischen A und B vorgenommen, indem Licht von der Strahlungsquelle über die Kalibriereinrichtung eingestrahlt wird und die Signalintensitäten I gemessen werden. Die quadratischen Symbole zeigen dabei den Verlauf der erfassten Intensität I eines einzelnen lichtsensitiven Elements oder bevorzugt eines Mittelwerts einiger oder aller lichtsensitiver Elemente des Detektors bei Verwendung des Bereiches A der Kalibriereinrichtung. Die runden Symbole zeigen Signalintensitäten I bei Verwendung des Bereiches B der Kalibriereinrichtung. Beide Verläufe zeigen über die Zeit t abnehmende Lichtintensitäten. Da in dem gezeigten Ausführungsbeispiel die Kalibriereinrichtung im Bereich B nur in jeder vierten Messung verwendet wird, ist die Degradation dieses Bereiches geringer. Unter Berücksichtigung der kumulativen Expositionszeit tₑ der Bereiche A und B kann eine Degradation der Kalibriereinrichtung 1 von der Degradation des Instrumentes 2 getrennt werden wie dies in Figur 4 illustriert ist. Die Rauten in Figur 4 zeigen das Degradationsverhalten des Instruments 2 und die Quadrate bzw. Kreise das Degradationsverhalten der Kalibriereinrichtung 1 im Bereich A bzw. B, sodass jeweils das Produkt von Instrument-Degradation und Degradation der Kalibriereinrichtung die Degradation der Messwerte in Figur 3 ergibt.

### Bezugszeichenliste

- 1: Kalibriereinrichtung
- 2: optisches Instrument
- 3: Bildfläche
- 4: strahlender Himmelskörper
- 5: Sonne
- 6: Detektor
- 7: optisch wirksames Element
- 8: Spiegel
- 8a: Spiegel
- 9: Array
- 10: Mikrospiegelarray
- 10a: Mikrospiegelarray
- 11: Strahlung
- 11a: Strahlung
- 12: Fourier-Element
- A₁: optische Achse
- A₂: optische Achse
- I: Signalintensität
- Nₒ: Oberflächennormale
- t: Zeit
- tₑ: Expositionszeit
- α: Strahlungswinkel
- β: Einfallwinkel

## Patentansprüche

1. Kalibriereinrichtung (1) zur Kalibration zumindest eines Detektors (6) eines optischen Instruments (2) in extraterrestrischer Umgebung insbesondere zur Fernerkundung der Erde enthaltend eine Vielzahl nebeneinander angeordneter optisch wirksamer, auf einen strahlender Himmelskörper (4) ausgerichteter und über ein Fourier-Element (12) auf zumindest einen Detektor (6) abbildender Elemente (7), **dadurch gekennzeichnet, dass** numerische Aperturen der optisch wirksamen Elemente (7) derart eingestellt sind, dass ein Akzeptanzwinkel der optisch wirksamen Elemente (7) ein Vielfaches eines von der extraterrestrischen Strahlungsquelle (4) eingestrahlten Strahlungswinkels (α) beträgt, sodass eine auf den Detektor (6) abgebildete Signalintensität (I) innerhalb des an die Variation der relativen Position der extraterrestrischen Strahlungsquelle (4) angepassten Akzeptanz-Winkelbereichs unabhängig von einem Einstrahlwinkel (β) der extraterrestrischen Strahlungsquelle (4) ist.

2. Kalibriereinrichtung (1) nach Anspruch 1, **dadurch gekennzeichnet, dass** die optisch wirksamen Elemente (7) gekrümmte Spiegel (8, 8a) eines Mikrospiegelarrays (10, 10a) sind.

3. Kalibriereinrichtung nach Anspruch 1, **dadurch gekennzeichnet, dass** die optisch wirksamen Elemente Linsen eines Mikrolinsenarrays sind.

4. Kalibriereinrichtung (1) nach Anspruch 1, 2 oder 3, **dadurch gekennzeichnet, dass** Facetten der optisch wirksamen Elemente (7) eine off-axis-Geometrie gegenüber einer Oberflächennormalen (Nₒ) des Mikrospiegelarrays (10a) bilden.

5. Kalibriereinrichtung (1) nach einem der Ansprüche 1 bis 4, **dadurch gekennzeichnet, dass** Abstände d von nebeneinander liegenden Facetten der optisch wirksamen Elemente (7) größer als oder gleich einer lateralen Kohärenzlänge Iₜᵣₐₙₛ sind.

6. Kalibriereinrichtung (1) nach Anspruch 4 oder 5, **dadurch gekennzeichnet, dass** ein optischer Gangunterschied g von nebeneinander liegenden Facetten der optisch wirksamen Elemente (7) größer als oder gleich einer longitudinalen Kohärenzlänge I_{long} ist.

7. Kalibriereinrichtung (1) nach einem der Ansprüche 1 bis 6, **dadurch gekennzeichnet, dass** zwischen einem ersten Array (9) optisch wirksamer Elemente (7) und dem Fourier-Element (12) ein zweites Array optisch wirksamer Elemente vorgesehen ist, wobei jeweils ein optisch wirksames Element des ersten Arrays (9) einen Lichtkegel auf jeweils eine korrespondierende Facette eines optisch wirksamen Elements des zweiten Arrays einstrahlt.

8. Kalibriereinrichtung (1) nach einem der Ansprüche 1 bis 7, **dadurch gekennzeichnet, dass** zusätzlich zum strahlenden Himmelskörper (4) eine künstliche Strahlungsquelle vorgesehen ist.

9. Kalibriereinrichtung (1) nach einem der Ansprüche 1 bis 6, **dadurch gekennzeichnet, dass** die optisch wirksamen Elemente (7) auf eine plane oder gewölbte Fläche aufgebracht sind, die in Form einer ebenen Fläche, einer Zylinder-, Kugel-, Kegel- und/oder Kegelstumpfflächen oder Ausschnitten daraus ausgebildet ist.

10. Kalibriereinrichtung (1) nach einem der Ansprüche 1 bis 9, **dadurch gekennzeichnet, dass** zumindest ein Teil der optisch wirksamen Elemente (7) zumindest zeitweise gegenüber einer Beleuchtung durch eine Strahlungsquelle (4) abdeckbar ist.

11. Kalibrierverfahren zur Durchführung einer Kalibration zumindest eines Detektors (6) eines optischen Instruments (2) in extraterrestrischer Umgebung insbesondere zur Fernerkundung der Erde enthaltend eine Vielzahl nebeneinander angeordneter optisch wirksamer, auf einen strahlenden Himmelskörper (4) ausgerichteter und über ein Fourier-Element (12) auf zumindest einen Detektor (6) abbildender Elemente (7), **dadurch gekennzeichnet, dass** zumindest zeitweise ein Teil der Detektoren und/oder zumindest ein Teil der optisch wirksamen Elemente (7) gegenüber einer Bestrahlung und/oder Umgebungseinflüssen abgedeckt werden oder unbenutzt bleiben und anhand eines Vergleichs unterschiedlich bedeckter oder unbenutzter Elemente ein Degradationsverhalten der Kalibriereinrichtung (1) und/oder des Instrumentes (2) ermittelt wird.

12. Kalibrierverfahren nach Anspruch 11, **dadurch gekennzeichnet, dass** zur Ermittlung eines Degradationsverhaltens eines Detektors (6) ermittelte Signalintensitäten (I) einer Strahlung unterschiedlich lange ausgesetzter Detektoren ausgehend von einem Ausgangszustand laufend verglichen und mittels eines ermittelten Degradationsverhaltens zeitaktuelle Kalibrationswerte von Detektoren korrigiert werden.

13. Kalibrierverfahren nach Anspruch 11 oder 12, **dadurch gekennzeichnet, dass** Verläufe von Signalintensitäten (I) ausgewählter Detektoren (6) über die Zeit (t) bei teilweise abgedeckten und nicht abgedeckten optisch wirksamen Elementen (7) ermittelt und daraus ein Degradationsverhalten der optisch wirksamen Elemente (7) abgeleitet und Kalibrationswerte des Instrumentes (2) korrigiert werden.

14. Kalibrierverfahren nach einem der Ansprüche 11 bis 13, **dadurch gekennzeichnet, dass** zumindest ein Teil der Detektoren (6) nicht betrieben und eine von einem Betrieb unabhängige Empfindlichkeit durch Vergleich mit unterschiedlichen Betriebszeiten betriebener Detektoren ermittelt wird.
